# EUROPEAN PATENT SPECIFICATION

(11) **EP 2 296 209 B1**
(45) Date of publication and mention of the grant of the patent: **21.11.2012**
(21) Application number: 10172466.4
(22) Date of filing: 11.08.2010
(51) Int. Cl.: H01M 4/66, H01M 4/04

(54) **Electrode plate of secondary battery and secondary battery having the same**
Elektrodenplatte für eine Sekundärbatterie und Sekundärbatterie damit
Plaque d'électrode de batterie secondaire et batterie secondaire dotée de celle-ci

(30) Priority: 14.08.2009 KR 20090075393
(43) Date of publication of application: 16.03.2011
(73) Proprietor: SB LiMotive Co., Ltd., Suwon-si Gyeonggi-do (KR)
(72) Inventor: Hashimoto, Tatsuya, Gyeonggi-do (KR); Lee, Wonhui, Gyeonggi-do (KR); Jeong, Dongho, Gyeonggi-do (KR)
(74) Representative: Gulde Hengelhaupt Ziebig & Schneider

(56) References cited:
- EP-A1- 1 038 994
- US-A1- 2004 072 079
- US-A1- 2006 045 790
- US-A1- 2008 026 293

## Description

The invention relates to a method of manufacturing an electrode plate for a secondary battery and an electrode plate manufactured by the method.

### Description of the Related Art

Generally, vehicles use an engine operating on either gasoline or diesel as a power source. However, as environmental pollution has become a major global issue, hybrid vehicles in which an electric motor together with the engine, which have been developed to reduce fuel consumption and improve overall energy consumption efficiency, are in the spotlight in the industry.

Batteries for hybrid electric vehicles (HEV) can be repeatedly charged and discharged because a chemical energy and an electrical energy are reversely converted into each other. Such an HEV battery typically includes an electrode assembly, a case, and a cap plate. The electrode assembly includes a positive electrode, a negative electrode, and a separator disposed between the positive electrode and the negative electrode. The case provides a space for receiving the electrode assembly. The cap plate is coupled to the case to seal the case.

The respective positive and negative electrodes that are electrode plates include a collector for collecting current and an active material coated on the collector. The respective electrode plates include a coated portion on which the active material is coated and an uncoated portion on which the active material is not coated. The electrode plate has a continuous belt shape and includes the uncoated portion on which the active material is not coated on one or either side edge of a longitudinal direction of the electrode plate. A conductive tab is attached to the uncoated portion of the electrode plate to respectively induce current generated from the positive electrode plate or the negative electrode plate to a positive terminal or a negative terminal. The active material is coated on the electrode plate, and then, drying and rolling processes are performed to form the coated portion. Since the coated portion of the electrode plate has a thickness greater than that of the uncoated portion due to the active material, the coated portion is rolled under a high pressure when the electrode plate is rolled. Thus, the coated portion may become greatly elongated. However, the uncoated portion of the electrode plate is not elongated because a pressure is not applied to the uncoated portion when the electrode plate is rolled.

That is, the electrode plate may be bent or deflected due to a relative elongation difference caused by a difference between a pressure applied to the coated portion and a pressure applied to the uncoated portion. Due to the bending or deflection, battery life may be reduced. In addition, it is difficult to obtain a sufficient power for operating the vehicles, and also, an internal short-circuit may occur.
US 2008/0026293 A1, US 2004/0072079 A1 and EP 1 038 994 A1 disclose exemplary common manufacturing methods of secondary batteries including an electrode plate with a coated portion, on which an active material is coated, and an uncoated portion. US 2006/0045790 A1 refers to a copper alloy and a manufacturing method thereof.

### SUMMARY

Embodiments are therefore directed to an electrode plate for a secondary battery, which can prevent or reduce bending or deflection caused by a difference of applied pressures due to a thickness difference between an active material coated portion and an uncoated portion.
An induction heating annealing apparatus comprises:
an unwinding roller for unwinding an electrode plate comprising an active material coated portion and an uncoated portion extending in a longitudinal direction of the collector along one or both sides of the coated portion;
a guide roller for transferring the electrode plate;
an induction heating annealing part for treating the uncoated portion of the electrode plate transferred from the guide roller; and
a winding roller for winding the electrode plate transferred from the guide roller.

According to the invention, there is provided a method of producing an electrode plate for a secondary battery comprising a collector with a coated portion, on which an active material is coated, and an uncoated portion extending in a longitudinal direction of the collector along one or both sides of the coated portion. The method comprising the steps of:
(i) providing an induction heating annealing apparatus as mentioned above; and
(ii) treating the uncoated portion of the electrode plate by means of the induction heat annealing part.

Further aspects of the invention are provided in the claims.

### BRIEF DESCRIPTION OF THE DRAWINGS

The above and other features will become more apparent to those of ordinary skill in the art by the following description of exemplary embodiments with reference to the attached drawings, in which:

FIG. 1 illustrates a perspective view of an electrode plate for a secondary battery according to an embodiment;

FIG. 2A illustrates a partial perspective view of an induction heating annealing (IHA) apparatus for manufacturing an electrode plate for a secondary battery according to an embodiment;

FIG. 2B illustrates an enlarged view of a portion A of FIG. 2A;

FIG. 2C illustrates a side schematic view of FIG. 2B;

FIG. 2D illustrates a sectional view taken along line B-B' of FIG. 2B;

FIGS. 3A to 3C illustrate X-ray diffraction analysis graphs of a collector of an electrode plate for a secondary battery according to an embodiment;

FIGS. 4A to 4C illustrate graphs of a ratio of peak intensity of one crystalline direction with respect to a peak intensity of another crystalline direction in a collector of an electrode plate for a secondary battery according to an embodiment;

FIG. 5 illustrates a graph of tensile strength and elongation comparison between an electrode plate for a secondary battery according to an embodiment and a related art electrode plate; and

FIGS. 6A and 6B illustrate graphs of a comparison between an electrode plate for secondary battery according to an embodiment and a related art electrode plate, in terms of a curl of the electrode plate.

### DETAILED DESCRIPTION

Exemplary embodiments will now be described more fully hereinafter with reference to the accompanying drawings. Here, like reference numerals refer to like elements throughout.

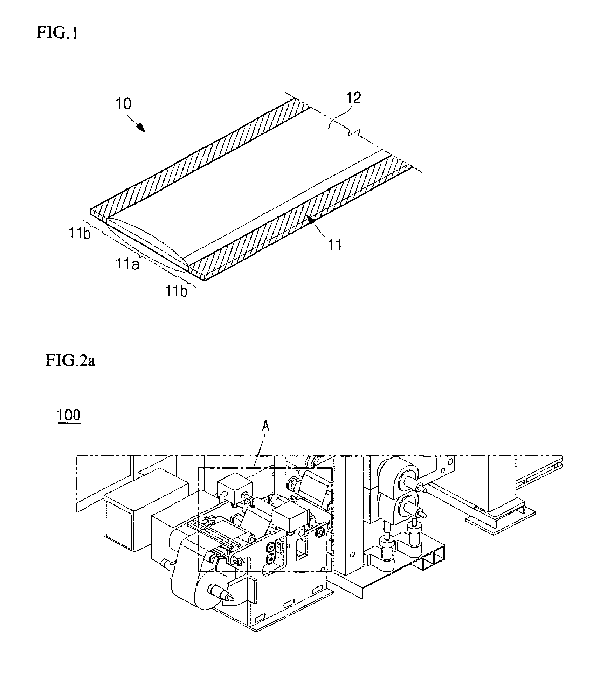

FIG. 1 illustrates a perspective view of an electrode plate for a secondary battery according to an embodiment.

Referring to FIG. 1, an electrode plate 10 includes a collector 11 and an active material 12.

The collector 11 may have a belt shape that is continuous in one direction. The collector 11 may include one of a positive electrode collector formed of aluminum (AI) and a negative electrode collector formed of copper (Cu). The collector 11 includes a coated portion 11a on which the active material 12 is coated and an uncoated portion 11b on which the active material 12 is not coated. The coated portion 11a has a certain width and extends along a longitudinal direction of the collector 11. The uncoated portion 11b may be disposed on both sides of the coated portion 11 a in the longitudinal direction of the collector 11 or on only one side of the coated portion 11 a.

The active material 12 may be coated along a longitudinal direction at a central region of the collector 11 except for at the uncoated portion 11 b. The active material 12 may include a lithium alloy such as LiCoO₂, LiMnO₂, or LiNiO₂ that is a positive electrode active material. The active material 12 may include a component selected from the group consisting of carbon, graphite, and combinations thereof.

The active material 12 is coated on the coated portion 11a, and the uncoated portion 11b is treated by induction heating annealing (hereinafter, referred to as an "IHA-treated") using an induction heating annealing (IHA) apparatus (see reference numeral 100 of FIGS. 2A to 2D) to be described later. Then, the electrode plate 10 is compressed using a rolling unit to form the resultant electrode plate 10. When the uncoated portion 11 b of the electrode plate 10 is IHA-treated using the IHA apparatus, a component of the collector 11 is changed to prevent or reduce the likelihood that the electrode plate 10 will be bent by a pressure difference caused when the electrode plate 10 is rolled.

A configuration of the IHA apparatus for IHA-treating the electrode plate used in the secondary battery according to an embodiment will be described below.

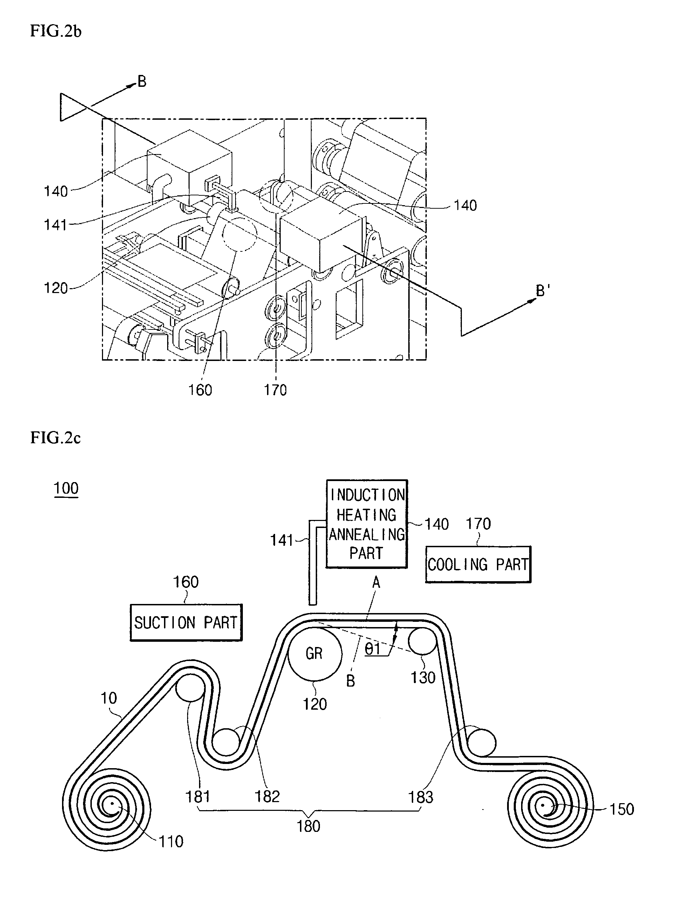

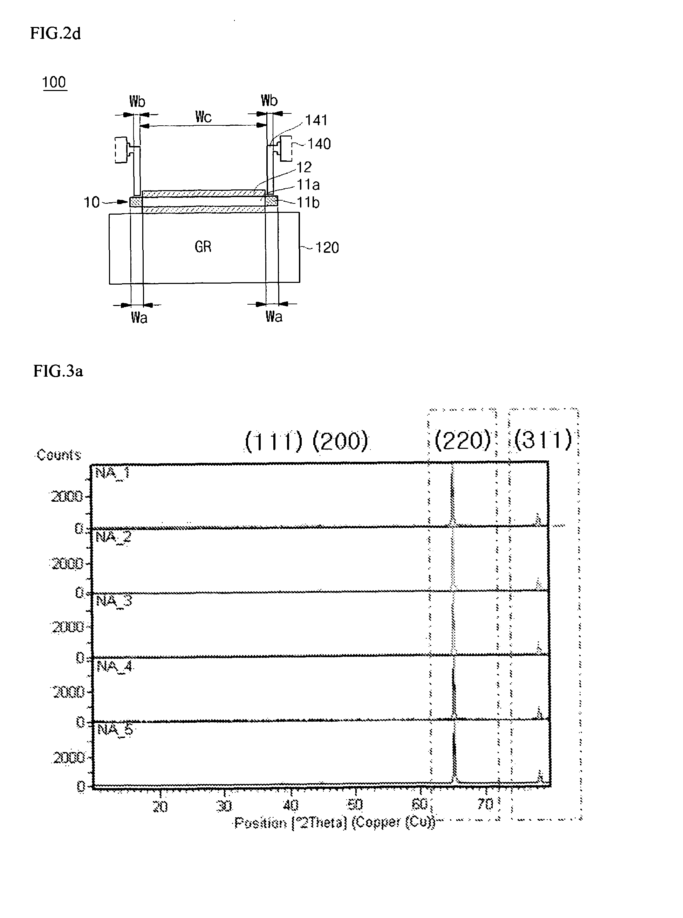

FIG. 2A illustrates a partial perspective view of an IHA apparatus for manufacturing an electrode plate for a secondary battery according to an embodiment. FIG. 2B illustrates an enlarged view of a portion A of FIG. 2A. FIG. 2C illustrates a schematic diagram of FIG. 2B. FIG. 2D illustrates a sectional view taken along line B-B' of FIG. 2B.

Referring to FIGS. 2A to 2D, the IHA apparatus 100 may include an unwinding roller 110, a guide roller 120, a transfer roller 130, an induction heating annealing (IHA) part 140, a winding roller 150, a suction part 160, a cooling part 170, and a dummy roller 180.

The unwinding roller 110 is used for unwinding the electrode plate 10 and may have a cylindrical shape. Here, the unwinding roller 110 is rotated about a rotation shaft such that the unwinding roller 110 contacts the electrode plate 10 to unwind the electrode plate 10. The unwinding roller 100 may receive a driving force from a motor (not shown) connected to the rotation shaft to unwind the electrode plate 10. Thus, the unwinding roller 110 unwinds the electrode plate 10 toward the IHA part 140 through the guide roller 120.

The guide roller 120 has a cylindrical shape. The guide roller 120 transfers the electrode plate 10 transferred from the unwinding roller 110. The guide roller 120 may have a width somewhat greater than that of the electrode plate 10 to easily transfer the electrode plate 10.

The guide roller 120 may be formed of a thermal nonconductive material. The guide roller 120 may be formed of a material having heat resistance, nonconductivity, and wear resistance such as TEFLON^{®}. Since TEFLON^{®} is a synthetic resin having a high heat resistance, TEFLON^{®} is not deformed at a high temperature due to the IHA. Also, since TEFLON^{®} has a smooth surface and high friction resistance properties, noise due to friction may be reduced, and pollutants do not easily adhere to it.

A rotation shaft of the guide roller 120 is parallel to the rotation shaft of the unwinding roller 110. Thus, the electrode plate 10 may be horizontally transferred from the unwinding roller 110 to the guide roller 120. Also, the guide roller 120 may be rotated about the rotation shaft to transfer the electrode plate 10 contacting a surface thereof.

The transfer roller 130 has a cylindrical shape. The transfer roller 130 transfers the electrode plate 10 transferred from the guide roller 120. A rotation shaft of the transfer roller 130 is parallel to the rotation shaft of the guide roller 120. Thus, the electrode plate 10 may be horizontally transferred from the guide roller 120 to the transfer roller 130.

An extension surface A horizontally extending from a top surface of the guide roller 120 in a tangential direction and a virtual surface B connecting the top surface of the guide roller 120 to a bottom surface of the transfer roller 130 may be inclined at an angle θ1 of about -20° to about 0°.

When the extension surface A and the virtual surface B are inclined at an angle θ1 of about -20° or more, an area of the electrode plate 10 contacting the guide roller 120 may be reduced to prevent heat applied to the electrode plate 10 from being transmitted to the guide roller 120. Also, when the extension surface A and the virtual surface B are inclined at an angle θ1 of about 0° or less, the deflection of the IHA electrode plate 10 may be improved to support the electrode plate 10. That is, the transfer roller 130 is disposed approximately parallel to the guide roller 120 to minimize heat transmitted from the electrode plate 10 to the guide roller 120 during the IHA.

The IHA part 140 includes a work coil 141 for inducting-annealing the uncoated portion 11b of the electrode plate 10. The work coil 141 may have a width Wb corresponding to a width Wa of the uncoated portion 11 b and may be formed of a metal having a high conductivity. The IHA part 140 is disposed above the guide roller 120. That is, the electrode plate 10 is transferred below the IHA part 140 through the guide roller 120. Thus, the uncoated portion 11b is induction-heated by the work coil 141 while the electrode plate 10 is transferred.

The IHA part 140 may be generally aligned with the uncoated portion 11 b of the electrode plate 10. Also, the IHA part 140 may be provided in plurality. Where there is more than one IHA part, the IHA parts 140 are spaced from and face each other to correspond to the uncoated portions 11b of the electrode plate 10. The plurality of IHA parts 140 may be spaced from each other by a distance corresponding to a distance Wc between the uncoated portions 11b.

The IHA part 140 may IHA-treat the uncoated portion 11b of the electrode plate 10 to generate self-heat within the collector 11, thereby changing material properties of the collector 11. Also, since the IHA part 140 IHA-treats the uncoated portion 11b through the work coil 141, full-annealing may be accomplished only for a short time, e.g., about 1 second to about 3 seconds. In addition, since grains of the uncoated portion 11b of the electrode plate 10 are changed through the IHA to change strength of the uncoated portion 11 b, a difference between the pressures applied to the coated portion 11 a and the uncoated portion 11 b may be inconsequential when the electrode plate 10 is rolled. That is, since only the uncoated portion 11 b of the electrode plate 10 is IHA-treated through the work coil 141, it may prevent or significantly reduce the likelihood that the electrode plate 10 will be bent or deflected due to a relative elongation difference between the coated portion 11a and the uncoated portion 11b when the electrode plate 10 is rolled.

The winding roller 150 has a cylindrical shape. The winding roller 150 transfers the electrode plate 10 transferred from the transfer roller 130. The winding roller 150 is rotated about a rotation shaft such that the winding roller 150 contacts the electrode plate 10 to wind the electrode plate 10. The rotation shaft of the winding roller 150 may be disposed parallel to the rotation shaft of the transfer roller 130 to allow the winding roller 150 to receive the electrode plate 10 from the transfer roller 130. The rotation shaft of the winding roller 150 may be connected to the motor (not shown) to receive a rotation force, thereby winding the electrode plate 10.

A typical suction device including a duct and a fan may be used as the suction part 160. The suction part 160 is disposed between the unwinding roller 110 and the IHA part 140 to suction organic materials existing on the electrode plate 10. That is, the suction part 160 suctions the organic materials remaining on the surface of the electrode plate 10 before the electrode plate 10 is transferred to the IHA part 140. Thus, when the electrode plate 10 is IHA-treated through the IHA part 140, each region of the uncoated portion 11b may be substantially uniformly IHA-treated.

The cooling part 170 may cool the electrode plate 10 using a blower such as a typical air pump or fan. The cooling part 170 may be disposed between the IHA part 140 and the winding roller 150 to cool the IHA-treated electrode plate 10. Here, although the cooling part 170 is disposed above the electrode plate 10 to cool only the top surface of the electrode plate 10 in FIG. 2C, the cooling part 170 may be disposed below the electrode plate 10 to cool the top and bottom surfaces of the electrode plate 10. Thus, the cooling part may cool the IHA-treated electrode plate 10 and dry volatile components remaining on the electrode plate 10.

In one embodiment, the cooling part 170 may be disposed extremely close to the IHA part 140 to improve a cooling speed of the electrode plate 10, and thus, it may prevent the guide roller 120 from being deformed by heat transmitted to the guide roller 120.

The dummy roller 180 may have a cylindrical shape to easily transfer the electrode plate 10. The dummy roller 180 may include front dummy rollers 181 and 182 disposed between the unwinding roller 110 and the guide roller 120 and a rear dummy roller 183 disposed between the guide roller 120 and the unwinding roller 150.

The front dummy rollers 181 and 182 include a first front dummy roller 181 disposed between the unwinding roller 110 and the suction part 160 and a second front dummy roller 182 disposed between the first front dummy roller 181 and the guide roller 120. The front dummy rollers 181 and 182 may be disposed below the guide roller 120 between the guide roller 120 and the unwinding roller 110. The rear dummy roller 183 may be disposed below the transfer roller 130 between the transfer roller 130 and the winding roller 150.

The dummy roller 180 provides tension to the electrode plate 10 between the unwinding roller 110 and the guide roller 120 and between the guide roller 120 and the winding roller 150. Also, the dummy roller 180 prevents the electrode plate 10 from being cracked or folded.

A characteristic change according to the IHA of the electrode plate for the secondary battery according to an embodiment will be described below.

FIGS. 3A to 3C illustrate X-ray diffraction analysis graphs of a collector of an electrode plate for a secondary battery having been subjected to certain processes.

FIG. 3A illustrates X-ray diffraction analysis results of the collector of the electrode plate for the secondary battery in which the uncoated portion is treated by non-annealing (NA). An X-ray diffraction analysis was respectively performed on 5 positive electrode collectors NA_1 to NA_5 formed of Al.

According to the X-ray diffraction analysis results of the NA-treated uncoated portion, a crystalline direction (220) and a crystalline direction (311) are primarily detected at the uncoated portion. That is, it is seen that the uncoated portion includes a grain having the crystalline direction (220) and a grain having the crystalline direction (311). The crystalline direction (220) represents a crystalline direction detected at a position at which a 2θ value of an X-ray diffraction analyzer is about 65. The crystalline direction (311) represents a crystalline direction detected at a position at which the 2θ value of the X-ray diffraction analyzer is about 78. That is, the crystalline directions (220) and (311) are detected at the NA-treated non coated portion through the X-ray diffraction analysis results.

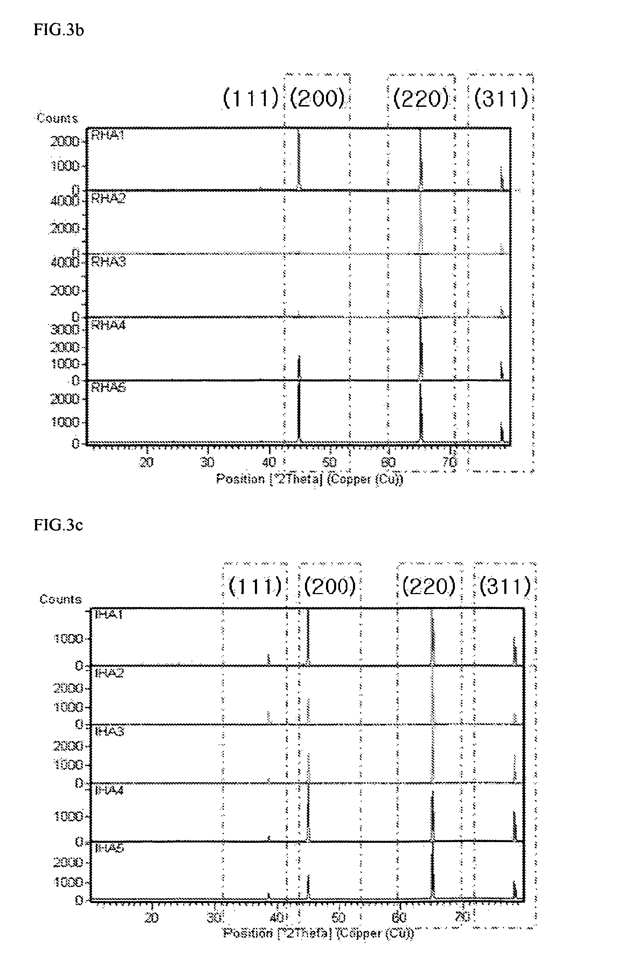

FIG. 3B illustrates X-ray diffraction analysis results of the collector of the electrode plate for the secondary battery in which the uncoated portion is treated by radiation heating annealing (RHA). An X-ray diffraction analysis was respectively performed on 5 positive electrode collectors RHA_1 to RHA_5 formed of Al.

Referring to FIG. 3B, according to the X-ray diffraction analysis results of the RHA-treated uncoated portion, a crystalline direction (200), a crystalline direction (220), and a crystalline direction (311) are primarily detected at the uncoated portion. That is, it is seen that the uncoated portion includes a grain having the crystalline direction (200), a grain having the crystalline direction (220), and a grain having the crystalline direction (311). The crystalline direction (200) represents a crystalline direction detected at a position at which the 2θ value of the X-ray diffraction analyzer is about 45. As described above, the crystalline direction (220) and the crystalline direction (311) represent the crystalline directions detected at the positions at which the 2θ value of the X-ray diffraction analyzer is about 65 and about 78, respectively. As seen in the graph, according to the X-ray diffraction analysis results, the RHA-treated uncoated portion has three primary crystalline directions.

FIG. 3C illustrates X-ray diffraction analysis results of the collector of the electrode plate for the secondary battery in which the uncoated portion is treated by IHA. An X-ray diffraction analysis was respectively performed on 5 positive electrode collectors IHA_1 to IHA_5 formed of Al.

Since the IHA is performed at only the uncoated portion 11 b of the collector 11, the X-ray diffraction analysis results of the coated portion 11a are equal to those of the NA-treated uncoated portion of FIG. 3A.

Referring to FIG. 3C, according to the X-ray diffraction analysis results of the IHA-treated uncoated portion 11b, a crystalline direction (111), a crystalline direction (200), a crystalline direction (220), and a crystalline direction (311) are primarily detected at the uncoated portion. That is, it is seen that the uncoated portion 11b includes a grain having the crystalline direction (111), a grain having the crystalline direction (200), a grain having the crystalline direction (220), and a grain having the crystalline direction (311). That is, according to the X-ray diffraction analysis results, the IHA-treated uncoated portion 11b has four main crystalline directions.

Also, it is seen that the IHA-treated uncoated portion 11b has the largest peak intensity in the crystalline direction (220), and peak intensities gradually decrease in the sequence of the crystalline direction (200), the crystalline direction (311), and the crystalline direction (111).

Thus, the crystalline direction (220) of the IHA-treated uncoated portion 11b decreases when compared to the NA-treated uncoated portion. However, the crystalline direction (111), the crystalline direction (200), and the crystalline direction (311) have increased additional directional properties. Also, the crystalline direction (111) of the IHA-treated uncoated portion 11b increases when compared to the RHA-treated uncoated portion. As a result, it is seen that the material properties of the collector 11 are changed because the crystalline directions of the grains are changed by the IHA.

Therefore, in the electrode plate 10 for the secondary battery according to an embodiment, the NA-treated coated portion 11a and the IHA-treated uncoated portion may have grains and material properties different from each other to prevent or reduce the likelihood of the electrode plate being bent or deflected by the pressure deviation when the electrode plate is elongated.

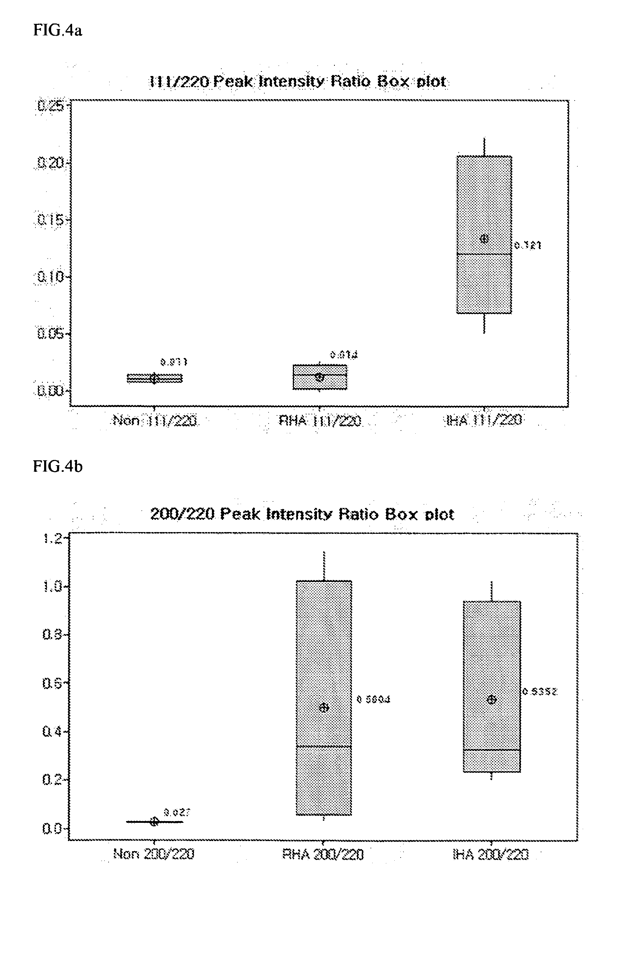

FIGS. 4A to 4C illustrate graphs of a ratio of peak intensity of a first crystalline direction with respect to a peak intensity of a second crystalline direction in a collector of an electrode plate for a secondary battery according to an embodiment; Table 1 shows results with respect to each cases in FIGS. 4A to 4C.

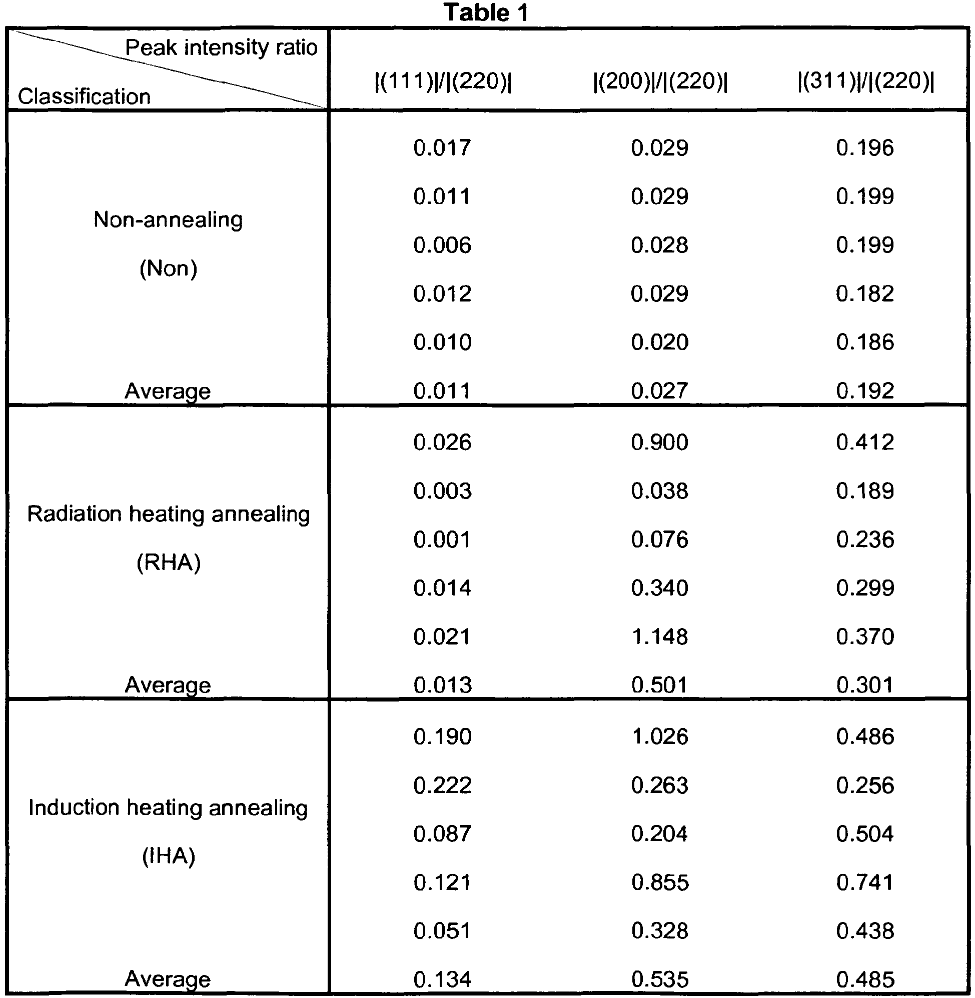

Referring to FIG. 4A and Table 1, ratios |(111)|/|(220)| obtained by dividing a peak intensity of the crystalline direction (111) of the NA-treated uncoated portion by a peak intensity of the crystalline direction (220) were measured with intensity ratios ranging from 0.006 to 0.017. Also, an average ratio was measured to be 0.011.

Ratios |(111)|/|(220)| obtained by dividing a peak intensity of the crystalline direction (111) of the RHA-treated uncoated portion by a peak intensity of the crystalline direction (220) were measured with intensity ratios ranging from 0.001 to 0.026. Also, an average ratio was measured to be 0.013.

Ratios |(111)|/|(220)| obtained by dividing a peak intensity of the crystalline direction (111) of the IHA-treated uncoated portion 11 b according to an embodiment by a peak intensity of the crystalline direction (220) were measured with intensity ratios ranging from 0.051 to 0.222. Also, an average ratio was measured to be 0.134.

Reviewing the results, the average value of the ratio |(111)|/|(220)| obtained by dividing a peak intensity of the crystalline direction (111) of the RHA-treated uncoated portion by a peak intensity of the crystalline direction (220) was 0.134. Thus, it was seen that the average ratio (i.e., 0.134) of the peak intensities of the IHA-treated uncoated portion 11 b is greater than the average ratio (i.e., 0.011) of the peak intensity of the NA-treated uncoated portion and the average ratio (i.e., 0.013) of the peak intensity of the RHA-treated uncoated portion. Also, the ratios |(111)|/|(220)| of the IHA-treated uncoated portion 11 b were measured with intensity ratios ranging from 0.051 to 0.222. Thus, it was seen that the intensity ratio range (i.e., ranging from 0.051 to 0.222) of the IHA-treated uncoated portion 11b is greater than the intensity ratio range (i.e., ranging from 0.006 to 0.017) of the NA-treated uncoated portion or the intensity ratio range (i.e., ranging from 0.001 to 0.0026) of the RHA-treated uncoated portion. As a result, in the IHA-treated uncoated portion 11b according to an embodiment, the peak intensity of the crystalline direction (220) that is a primary direction is less than that of an existing crystalline direction, and the peak intensity of the crystalline direction (111) is greater than that of the existing crystalline direction. Therefore, the material properties may be changed to secure diversity of the crystalline direction, thereby preventing or reducing the likelihood that the electrode plate will be bent and deflected.

Referring to FIG. 4B and Table 1, ratios |(200)|/|(220)| obtained by dividing a peak intensity of the crystalline direction (200) of the NA-treated uncoated portion by a peak intensity of the crystalline direction (220) were measured with intensity ratios ranging from 0.020 to 0.029. Also, an average ratio was measured to be 0.027.

Ratios |(200)|/|(220)| obtained by dividing a peak intensity of the crystalline direction (200) of the RHA-treated uncoated portion by a peak intensity of the crystalline direction (220) were measured with intensity ratios ranging from 0.076 to 0.148. Also, an average ratio was measured to be 0.501.

Ratios |(200)|/|(220)| obtained by dividing a peak intensity of the crystalline direction (200) of the IHA-treated uncoated portion 11b according to an embodiment by a peak intensity of the crystalline direction (220) were measured with intensity ratios ranging from 0.204 to 1.026. Also, an average ratio was measured to be 0.535.

Reviewing the results, the average value of the ratio |(200)|/|(220)| obtained by dividing a peak intensity of the crystalline direction (200) of the RHA-treated uncoated portion by a peak intensity of the crystalline direction (220) was 0.535. Thus, it was seen that the average ratio (i.e., 0.535) of the peak intensities of the IHA-treated uncoated portion 11b is greater than the average ratio (i.e., 0.027) of the peak intensity of the NA-treated uncoated portion and the average ratio (i.e., 0.501) of the peak intensity of the RHA-treated uncoated portion. That is, in the IHA-treated uncoated portion 11b according to an embodiment, the peak intensity of the crystalline direction (220) that is a primary direction decreases on average, and the peak intensity of the crystalline direction (200) increases on average. Therefore, the material properties may be changed to secure diversity of the crystalline direction, thereby preventing or reducing the likelihood that the electrode plate will be bent or deflected.

It was seen that the intensity ratio range of the IHA-treated uncoated portion 11b (i.e., ranging from 0.051 to 0.222) is wider than the intensity ratio range of the NA-treated uncoated portion (i.e., ranging from 0.020 to 0.029) and narrower than the intensity ratio range of the RHA-treated uncoated portion (i.e., ranging from 0.076 to 1.148). These characteristics are because of the directional properties of the crystalline directions. Although the range of the intensity ratio |(200)|/|(220)| of the IHA-treated uncoated portion 11b is narrower than that of the RHA-treated uncoated portion, the average value of the ratio |(200)|/|(220)| of the RHA-treated uncoated portion is greater. That is, it was seen that the peak intensity of the crystalline direction (220) decreased, and the peak intensity of the crystalline direction (200) increased.

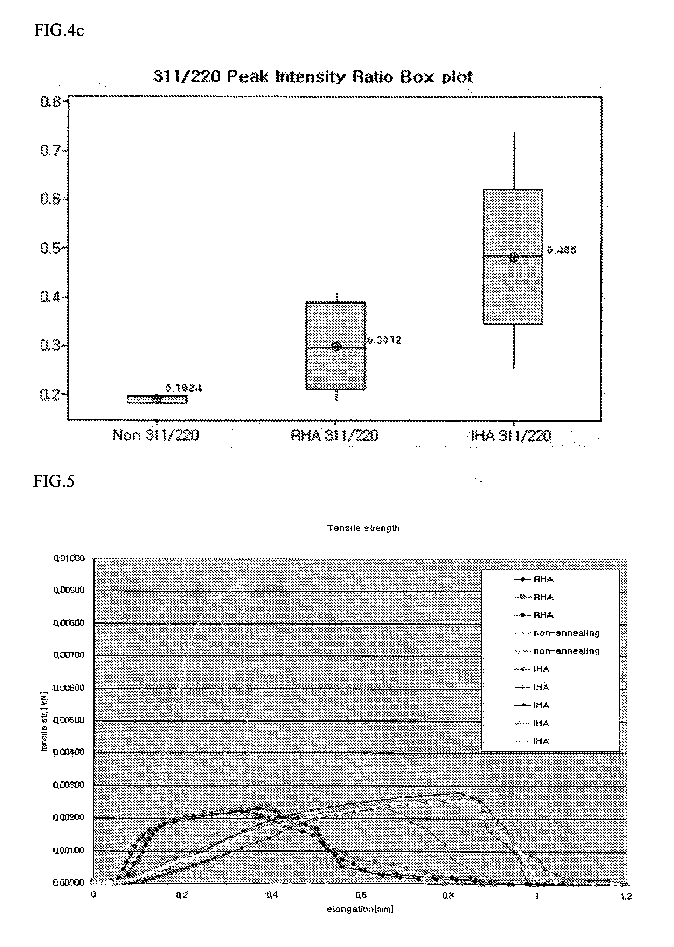

Referring to FIG. 4C and Table 1, ratios |(311)|/|(220)| obtained by dividing a peak intensity of the crystalline direction (311) of the NA-treated uncoated portion by a peak intensity of the crystalline direction (220) were measured with intensity ratios ranging from 0.182 to 0.199. Also, an average ratio was measured to be 0.192.

Ratios |(311)|/|(220)| obtained by dividing a peak intensity of the crystalline direction (311) of the RHA-treated uncoated portion by a peak intensity of the crystalline direction (220) were measured with intensity ratios ranging from 0.189 to 0.412. Also, an average ratio was measured to be 0.301.

Ratios |(311)|/|(220)| obtained by dividing a peak intensity of the crystalline direction (311) of the IHA-treated uncoated portion 11b according to an embodiment by a peak intensity of the crystalline direction (220) were measured with intensity ratios ranging from 0.256 to 0.741. Also, an average ratio was measured to be 0.485.

Reviewing the results, the average value of the ratio |(311)|/|(220)| obtained by dividing a peak intensity of the crystalline direction (311) of the RHA-treated uncoated portion by a peak intensity of the crystalline direction (220) was 0.485. Thus, it was seen that the average ratio (i.e., 0.485) of the peak intensities of the IHA-treated uncoated portion 11b was greater than the average ratio (i.e., 0.192) of the peak intensity of the NA-treated uncoated portion and the average ratio (i.e., 0.301) of the peak intensity of the RHA-treated uncoated portion. Also, it was seen that the intensity ratio range (i.e., ranging from 0.256 to 0.741) of the IHA-treated uncoated portion 11b was overall greater than the intensity ratio range (i.e., ranging from 0.182 to 0.199) of the NA-treated uncoated portion and the intensity ratio range (i.e., ranging from 0.189 to 0.412) of the RHA-treated uncoated portion. At least one reason that the intensity ratio range is greater than 0.412 and less than 0.741 is because the uncoated portion 11b according to an embodiment is IHA-treated. Also, in the IHA-treated uncoated portion 11b according to an embodiment, the peak intensity of the crystalline direction (220) that is a primary direction is relatively decreased, and the peak intensity of the crystalline direction (311) is relatively increased. Therefore, the material properties may be changed to secure diversity of the crystalline direction, thereby preventing or reducing the likelihood that the electrode plate will be bent or deflected.

FIG. 5 illustrates a graph of a comparison between an electrode plate for a secondary battery according to an embodiment and a related art electrode plate, in terms of a tensile strength and elongation.

Referring to FIG. 5, tensile strengths and elongations of the electrode plate including the NA-treated uncoated portion, the RHA-treated uncoated portion, and the IHA-treated uncoated portion 11b were measured and compared to each other.

The NA-treated uncoated portion was elongated by a length of about 0.3 mm to about 0.4 mm with respect to a reference length 1 mm. That is, it was seen that the elongation of the NA-treated uncoated portion ranges from about 30% to about 40%. Also, the tensile strength of the NA-treated uncoated portion may range from about 8 N to about 9 N. That is, the elongation of the NA-treated uncoated portion is less than about 40%. Thus, when a stress is applied to the NA-treated uncoated portion to elongate the NA-treated uncoated portion by more than about 40%, the NA-treated uncoated portion may be plastically deformed and destroyed. Also, it is difficult to elongate the NA-treated uncoated portion when a low tensile strength is applied as shown in FIG. 5.

The RHA-treated uncoated portion may be elongated by a length of about 0.5 mm to about 0.8 mm with respect to the reference length 1 mm. That is, the elongation of the RHA-treated uncoated portion may range from about 50% to about 80%. Also, the tensile strength of the RHA-treated uncoated portion may range from about 1.5 N to about 2.5 N. The RHA-treated uncoated portion has a high elongation and a low tensile strength when compared to the NA-treated uncoated portion. That is, since the RHA-treated uncoated portion is elongated by a relatively low tensile strength when compared to the NA-treated uncoated portion, the elongation of the RHA-treated uncoated portion is superior. However, when the uncoated portion is RHA-treated, since the uncoated portion as well as the entire electrode plate are RHA-treated, RHA treatment time is longer, and the material properties of the coated portion as well as the uncoated portion are changed. Thus, the RHA-treated electrode plate may be bent due to a difference between the pressures applied to the coated portion and the uncoated portion when the electrode plate is rolled.

The IHA-treated uncoated portion 11 b may be elongated by a length of about 1 mm to about 1.2 mm with respect to the reference length 1 mm. That is, the elongation of the IHA-treated uncoated portion 11b may range from about 100% to about 120%. Also, the tensile strength of the IHA-treated uncoated portion 11b may range from about 2 N to about 3 N. At this time, since only the uncoated portion 11b of the electrode plate 10 is IHA-treated, the tensile strength and the elongation of the coated portion 11a are not changed. Thus, the coated portion 11a has a tensile strength and elongation different from the IHA-treated uncoated portion 11b. Also, since the elongation of the IHA-treated uncoated portion 11b may range from about 100% to about 120%, the IHA-treated uncoated portion 11b is significantly superior when compared to the elongation of the NA-treated uncoated portion or the elongation of the RHA-treated uncoated portion. Also, since the IHA-treated uncoated portion is elongated by a relative low tensile strength when compared to the NA-treated uncoated portion or the RHA-treated uncoated portion, the elongation of the IHA-treated uncoated portion is superior.

In addition, it is seen that the IHA-treated uncoated portion stands against a tensile strength greater than that of the RHA-treated uncoated portion. Thus, it is seen that the IHA-treated uncoated portion may have a superior elongation when compared to that of the RHA-treated uncoated portion and stand against a tensile strength greater than that of the RHA-treated uncoated portion.

Thus, when only the uncoated portion 11b of the electrode plate 10 is IHA-treated, since the material properties of only the uncoated portion 11 b is changed to increase its elongation, it may prevent the electrode plate from being bent due to a difference between pressures applied to the coated portion and the uncoated portion 11b when the electrode plate is rolled.

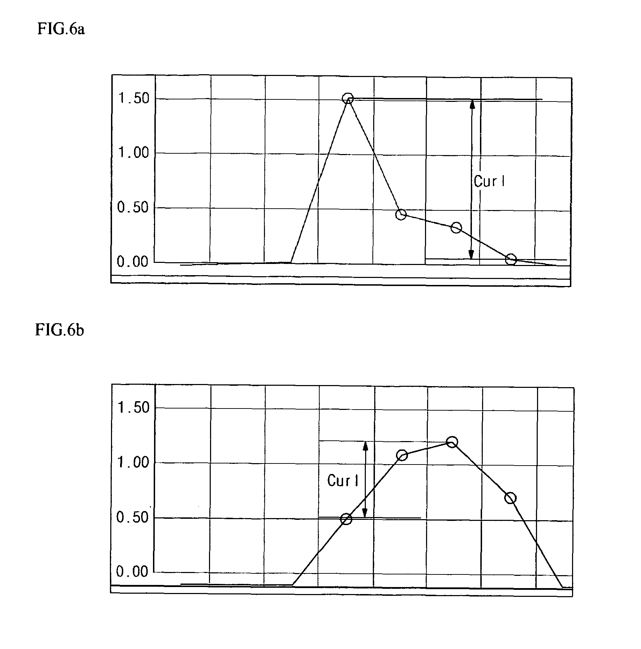

FIGS. 6A and 6B illustrate graphs of a comparison between an electrode plate for secondary battery according to an embodiment and a related art electrode plate, in terms of a curl of the electrode plate.

FIGS. 6A and 6B illustrate curls in the electrode plate including the NA-treated uncoated portion and the IHA-treated uncoated portion 11b, respectively. Here, the curl represents a standard deviation of a deflection amount between the uncoated portion and the coated portion 11a after the rolling process is performed.

Referring to FIG. 6A, in the NA-treated uncoated portion, the curl was measured at about 1.55 mm. That is, it was seen that the deflection of the NA-treated uncoated portion occurs due to a difference between pressures applied to the coated portion 11a and the uncoated portion.

Referring to FIG. 6B, in the IHA-treated uncoated portion 11b, the curl was measured at about 1.67 mm. That is, it was seen that the deflection of the IHA-treated uncoated portion is reduced due to a difference between pressures applied to the coated portion 11 a and the uncoated portion 11 b.

A secondary battery to which the electrode plate according to an embodiment is applicable will described below.

The secondary battery includes an electrode assembly including a positive electrode plate, a negative electrode plate, and a separator disposed between the positive electrode plate and the negative electrode plate, which are wound in a jelly roll shape. In a structure including the wound shape of the electrode assembly, an electrode assembly used for a typical secondary battery may be used as the electrode assembly. Here, their detailed description will be omitted.

The positive electrode plate may include the electrode plate 10 according to this embodiment. Also, the negative electrode plate may include the electrode plate 10 according to an embodiment.

When the positive electrode plate includes the electrode plate 10 according to this embodiment, the bending and deflection of the electrode plate may be reduced. Thus, the electrode assembly may be further uniformly wound.

In the electrode plate for the secondary battery according to the embodiment, the uncoated portion of the electrode plate is IHA-treated to change its material properties, thereby to increase the elongation such that drain of the uncoated portion has the multi-directional properties. As a result, it may prevent or reduce the likelihood that the electrode plate is bent due to the thickness difference between the coated portion on which the active material is coated and the uncoated portion.

Also, in the secondary battery including the electrode plate for the secondary battery according to the embodiment, the secondary battery life may increase, and the internal short-circuit due to the bending of the electrode assembly may be prevented.

## Claims

1. A method of producing an electrode plate (10) for a secondary battery comprising a collector (11) with a coated portion (11 a), on which an active material (12) is coated, and an uncoated portion (11b) extending in a longitudinal direction of the collector (11) along one or both sides of the coated portion (11 a), the method comprising the steps of:
(i) providing an induction heating annealing apparatus (100) comprising:
an unwinding roller (110) for unwinding the electrode plate (10) comprising the active material coated portion (11 a) and the uncoated portion (11 b);
a guide roller (120) for transferring the electrode plate (10);
an induction heating annealing part (140) for treating the uncoated portion (11b) of the electrode plate (10) transferred from the guide roller (120); and
a winding roller (150) for winding the electrode plate (10) transferred from the guide roller (120); and
(ii) treating the uncoated portion (11b) of the electrode plate (10) by means of the induction heat annealing part (140).

2. The method of claim 1, wherein the induction heating annealing part (140) treats at least one surface of the uncoated portion (11 b) through a work coil (141).

3. An electrode plate (10) for a secondary battery produced by the method of claim 1 or 2.

4. The electrode plate of claim 3, wherein in an X-ray diffraction analysis the uncoated portion (11b) has at least four crystalline directions.

5. The electrode plate as claimed in claim 4, wherein, in an X-ray diffraction analysis of the uncoated portion (11b), a ratio of a peak intensity of one of the crystalline directions having the second largest peak intensity to a peak intensity of one of the crystalline directions having the largest peak intensity ranges from 0.256 to 0.741.

6. The electrode plate as claimed in claims 4 or 5, wherein, in an X-ray diffraction analysis of the uncoated portion (11 b), a ratio of a peak intensity of one of the crystalline directions having the fourth largest peak intensity to a peak intensity one of the crystalline directions having the largest peak intensity ranges from 0.051 to 0.222.

7. The electrode plate as claimed in any one of claims 4 through 6, wherein the crystalline directions comprise a first crystalline direction (111), a second crystalline direction (200), a third crystalline direction (220), and a fourth crystalline direction (311)

8. The electrode plate as claimed in claim 7, wherein the uncoated portion (11b) has the largest peak intensity in the crystalline direction (220).

9. The electrode plate as claimed in claim 7, wherein, in the uncoated portion (11b), a ratio of a peak intensity of the fourth crystalline direction (311) to a peak intensity of the third crystalline direction (220) is greater than 0.412 and less than 0.741.

10. The electrode plate as claimed in claim 7, wherein, in the uncoated portion (11b), a ratio of a peak intensity of the crystalline direction (111) to a peak intensity of the crystalline direction (220) ranges from 0.051 to 0.222.

11. The electrode plate as claimed in claim 3, wherein the collector (11) is belt-shaped.

## Patentansprüche

1. Verfahren zur Herstellung einer Elektrodenplatte (10) für eine Sekundärbatterie, aufweisend einen Kollektor (11) mit einem beschichteten Abschnitt (11a), auf dem ein aktives Material (12) aufgebracht ist, und einem unbeschichteten Abschnitt (11b), der sich in eine Längsrichtung des Kollektors (11) entlang einer oder beider Seiten des beschichteten Abschnitts (11a) erstreckt, wobei das Verfahren die folgenden Schritte aufweist:
(i) Bereitstellung einer Vorrichtung (100) zum Glühen durch Induktionserwärmung, aufweisend:
eine Abwickelrolle (110) zum Abwickeln der Elektrodenplatte (10), die den mit dem aktiven Material beschichteten Abschnitt (11a) und den unbeschichteten Abschnitt (11b) aufweist;
eine Führungsrolle (120) zum Übertragen der Elektrodenplatte (10);
einen Teil (140) zum Glühen durch Induktionserwärmung zur Behandlung des unbeschichteten Abschnitts (11b) der von der Führungsrolle (120) übertragenen Elektrodenplatte (10); und
eine Aufwickelrolle (150) zum Aufwickeln der von der Führungsrolle (120) übertragenen Elektrodenplatte (10); und
(ii) Behandlung des unbeschichteten Abschnitts (11b) der Elektrodenplatte (10) mittels des Teils (140) zum Glühen durch Induktionserwärmung.

2. Verfahren nach Anspruch 1, wobei der Teil (140) zum Glühen durch Induktionserwärmung zumindest eine Oberfläche des unbeschichteten Abschnitts (11b) mittels einer Arbeitsspule (141) behandelt.

3. Elektrodenplatte (10) für eine mittels des Verfahrens nach Anspruch 1 oder 2 hergestellte Sekundärbatterie.

4. Elektrodenplatte nach Anspruch 3, wobei der unbeschichtete Abschnitt (11b) in einer Röntgenstrukturanalyse mindestens vier kristalline Richtungen aufweist.

5. Elektrodenplatte nach Anspruch 4, wobei in einer Röntgenstrukturanalyse des unbeschichteten Abschnitts (11b) ein Verhältnis einer Spitzenintensität einer der kristallinen Richtungen, die die zweithöchste Spitzenintensität aufweist, zu einer Spitzenintensität einer der kristallinen Richtungen, die die höchste Spitzenintensität aufweist, im Bereich von 0,256 bis 0,741 liegt.

6. Elektrodenplatte nach Anspruch 4 oder 5, wobei in einer Röntgenstrukturanalyse des unbeschichteten Abschnitts (11b) ein Verhältnis einer Spitzenintensität einer der kristallinen Richtungen, die die vierthöchste Spitzenintensität aufweist, zu einer Spitzenintensität einer der kristallinen Richtungen, die die höchste Spitzenintensität aufweist, im Bereich von 0,051 bis 0,222 liegt.

7. Elektrodenplatte nach einem der Ansprüche 4 bis 6, wobei die kristallinen Richtungen eine erste kristalline Richtung (111), eine zweite kristalline Richtung (200), eine dritte kristalline Richtung (220) und eine vierte kristalline Richtung (311) aufweisen.

8. Elektrodenplatte nach Anspruch 7, wobei der unbeschichtete Abschnitt (11b) die höchste Spitzenintensität in die kristalline Richtung (220) aufweist.

9. Elektrodenplatte nach Anspruch 7, wobei in dem unbeschichteten Abschnitt (11b) ein Verhältnis einer Spitzenintensität der vierten kristallinen Richtung (311) zu einer Spitzenintensität der dritten kristallinen Richtung (220) größer als 0,412 und kleiner als 0,741 ist.

10. Elektrodenplatte nach Anspruch 7, wobei in dem unbeschichteten Abschnitt (11b) ein Verhältnis einer Spitzenintensität der kristallinen Richtung (111) zu einer Spitzenintensität der kristallinen Richtung (220) im Bereich von 0,051 zu 0,222 liegt.

11. Elektrodenplatte nach Anspruch 3, wobei der Kollektor (11) bandförmig ist.

## Revendications

1. Procédé de production d'une plaque d'électrode (10) pour une batterie secondaire comprenant un collecteur (11) avec une partie revêtue (11a), qui est revêtue par un matériau actif (12), et une partie non revêtue (11b) s'étendant dans une direction longitudinale du collecteur (11) le long d'un ou des deux côtés de la partie revêtue (11a), le procédé comprenant les étapes consistant à :
(i) disposer un appareil de recuit à chauffage par induction (100), comprenant :
un rouleau de déroulement (110) pour dérouler la plaque d'électrode (10) comprenant la partie revêtue de matériau actif (11a) et la partie non revêtue (11b) ;
un rouleau de guidage (120) pour transférer la plaque d'électrode (10) ;
une partie de recuit à chauffage par induction (140) pour traiter la partie non revêtue (11b) de la plaque d'électrode (10) transférée à partir du rouleau de guidage (120) ; et
un rouleau d'enroulement (150) pour enrouler la plaque d'électrode (10) transférée à partir du rouleau de guidage (120) ; et
(ii) traiter la partie non revêtue (11b) de la plaque d'électrode (10) à l'aide de la partie de recuit à chauffage par induction (140).

2. Procédé selon la revendication 1, dans lequel la partie de recuit à chauffage par induction (140) traite au moins une surface de la partie non revêtue (11b) à l'aide d'un enroulement de travail (141).

3. Plaque d'électrode (10) pour une batterie secondaire produite par le procédé selon la revendication 1 ou 2.

4. Plaque d'électrode selon la revendication 3, dans laquelle, dans une analyse de diffraction de rayons X, la partie non revêtue (11b) comporte au moins quatre directions cristallines.

5. Plaque d'électrode selon la revendication 4, dans laquelle, dans une analyse de diffraction de rayons X de la partie non revêtue (11b), un rapport d'un pic d'intensité de l'une des directions cristallines ayant le deuxième plus grand pic d'ïntensité à un pic d'ïntensité de l'une des directions cristallines ayant le plus grand pic d'intensité est compris entre 0,256 et 0,741.

6. Plaque d'électrode selon les revendications 4 ou 5, dans laquelle, dans une analyse de diffraction de rayons X de la partie non revêtue (11b), un rapport du pic d'intensïté de l'une des directions cristallines ayant le quatrième plus grand pic d'intensïté à un pic d'ïntensïté de l'une des directions cristallines ayant le plus grand pic d'intensité est compris entre 0,051 et 0,222.

7. Plaque d'électrode selon l'une quelconque des revendications 4 à 6, dans laquelle les directions cristallines comprennent une première direction cristalline (111), une deuxième direction cristalline (200), une troisième direction cristalline (220) et une quatrième direction cristalline (311).

8. Plaque d'électrode selon la revendication 7, dans laquelle la partie non revêtue (11b) a le plus grand pic d'intensité dans la direction cristalline (220).

9. Plaque d'électrode selon la revendication 7, dans laquelle, dans la partie non revêtue (11b), un rapport d'un pic d'intensité de la quatrième direction cristalline (311) à un pic d'intensité de la troisième direction cristalline (220) est supérieur à 0,412 et inférieur à 0,741.

10. Plaque d'électrode selon la revendication 7, dans laquelle, dans la partie non revêtue (11b), un rapport d'un pic d'intensité de la direction cristalline (111) à un pic d'intensité de la direction cristalline (220) est compris entre 0,051 et 0,222.

11. Plaque d'électrode selon la revendication 3, dans laquelle le collecteur (11) a une forme de courroie.
